# Europäisches Patentamt
# European Patent Office
# Office européen des brevets

(19)

(11) Publication number: **0 006 682**
**B1**

(12) ## EUROPEAN PATENT SPECIFICATION

(45) Date of publication of patent specification: **28.11.84**

(51) Int. Cl.³: **B 29 C 17/03**

(21) Application number: **79300869.9**

(22) Date of filing: **18.05.79**

(54) **Method and apparatus for tool-assisted stretch-forming of deep-drawn hollow articles from thermoplastics.**

(30) Priority: **18.05.78 AU 4433/78**
**22.06.78 AU 4833/78**
**03.04.79 AU 8263/79**
**17.04.79 AU 8398/79**

(43) Date of publication of application:
**09.01.80 Bulletin 80/01**

(45) Publication of the grant of the patent:
**28.11.84 Bulletin 84/48**

(84) Designated Contracting States:
**AT BE CH DE FR GB IT LU NL SE**

(56) References cited:
**BE-A- 860 883**
**DE-B-2 118 841**
**FR-A-1 214 895**
**FR-A-1 238 800**
**FR-A-1 419 876**
**FR-A-2 124 903**
**FR-A-2 278 469**
**GB-A- 860 810**
**NL-A- 299 923**
**US-A-2 974 366**
**US-A-3 078 025**
**US-A-3 420 930**

(73) Proprietor: **ICI AUSTRALIA LIMITED**
**ICI House 1 Nicholson Street P.O.Box 4311**
**Melbourne Victoria 3001 (AU)**

(72) Inventor: **Keith, Donald George**
**32 Volitans Avenue**
**Mount Eliza 3930 Victoria (AU)**
Inventor: **Flecknoe-Brown, Anthony**
**36 Murchison Street**
**Carlton 3053 Victoria (AU)**

(74) Representative: **Kneissl, Richard, Dr. et al**
**Widenmayerstrasse 46**
**D-8000 München 22 (DE)**

Courier Press, Leamington Spa, England.

## Description

This invention relates to a method and apparatus for stretch-forming deep-drawn hollow articles (e.g. cups) from a heat-softened sheet of thermoplastics material. "Deep-drawn" conventionally means that the sheet is stretched by more than 200% (usually 1,000%) of its original area.

Stretch-forming heat-softened sheets of thermoplastics material solely by differential fluid pressure produces deep-drawn articles with variations in wall thickness which are outside the tolerances required for printing and which present a risk of puncture and reduced crush resistance. To overcome these problems wall thicknesses are employed which are greater than would otherwise be necessary and consequently extra material is consumed.

The book "Principles of Vacuum Forming" by A. Thiel and published by Iliffe of London in 1965 explains that more uniform walll thickness is obtained when stretching is assisted by a plug provided that the plug is carefully finished so that the softened sheet can slide over it with little difficulty and provided that the temperature of the plug is carefully controlled to avoid chilling the sheet. This latter requirement means that plug-assisted stretch-forming has hitherto been sensitive to minor fluctuations in temperature and in particular it has not been commercially practicable to perform the process in line on sheets of crystalline polyolefin being extruded from a slit die.

An early form of plug for use in stretch-forming polyolefin sheet is described in British patent specification 860 810, the contents of which are herein incorporated by reference. GB 860 810 describes an expandable plug constructed from pivotted links having edges which engage the sheet during stretching and when the plug is fully inserted, the links can be pivotted outwardly away from each other to expand the plug. Portions of sheet between pairs of adjacent links and the portion of sheet bounded by the lower ends of the links all stretch in the same proportion so the use of the plug ensures uniform stretching between these portions of the sheet. However, the need to allow the sheet to slide easily over the links prevents the links exerting any positive control over the stretching of the sheet within a portion and so improvements in uniformity of wall thickness were limited. Moreover, the need to allow easy sliding of the sheet resulted in the use of plugs comprising not more than eight links and consequently unacceptable inwards bowing of the portions occurred during stretching. This bowing had to be corrected by a subsequent process of substantial dilation by fluid pressure and this re-introduced some of the variations in wall thickness which had been overcome by the use of the plug.

A more modern plug for use in stretch-forming polyolefin sheet is described in British patent specification 1 378 945, the contents of which are herein incorporated by reference. GB 1 378 945 describes a non-expandable plug in which the links of the plug of GB 860 810 are in effect replaced by lobate corners. The lobate corners facilitate uniform stretching between different portions of the sheet but only at the cost of preventing the corners of the stretch-formed article from comprising a line of less stretched and therefore thicker material. Corners composed of such lines of thicker material are useful in that they act as vertical reinforcing ribs when the stretch-formed articles are stacked one on top of another.

Like the plug of GB 860 810, the plug of GB 1 378 945 is unable to exert a positive control over the stretching of the sheet between the corners of the plug and also it requires the same subsequent substantial dilation by fluid pressure to counteract inward bowing of the sheet. Both plugs do not attempt to reduce the sensitivity of plug-assisted stretch-forming processes to fluctuations in temperature.

An alternative stretch-forming process is described in Australian patent specification 460 849, the contents of which are herein incorporated by reference. AU 460 849 discloses a method of stretch-forming heat-softened sheet of melt-spinnable plastics material held against substantial non-stretching movements in which the sheet is stretched by a movement of a cold tip of a needle or knife edge relative to the sheet which causes the tip to press against one face of the sheet and stretch or "cuspate" part of the sheet into a cuspidate parison. This process is called "cuspation" by AU 460 849. The cold tip chills and therefore strengthens a localised blob of heat-softened plastics material at the cusp against which the tip presses and so the chilled blob prevents puncture of the sheet by the tip and enables unchilled portions of the sheet to stretch in response to pressure exerted on the blob by the tip. The method is limited to the production of cuspidate parisons although AU 460 849 does postulate that the cuspidate parisons might be subsequently blown into moulds. Such a subsequent blowing process re-introduces the problems of control of wall thickness and temperature sensitivity inherent in stretch-forming by differential fluid pressure and does not appear to have been used commercially to make deep-drawn hollow articles.

FR—A—2 278 469 disclose an expandable modification of the usually solid insulated plug comprising movable segments contained within a stretchable insulating sleeve. The plug is expanded radially after its longitudinal motion has ceased, in order to cause the base and lower wall area which is held in contact with it by the elastic tension in the molten plastic membrane, to be further stretched and thinned out before final forming by differential pressure takes place. In this way, it is proposed that thinner cup bases and more evenly distributed cup walls can be achieved as desired.

The purpose of the expandable plug is to try to control stretch by a gross contact of the expanding plug with the molten sheet, rather than by localized contact and deliberate chilling at the tips and along the edges of separable colder blades. This invention specifically seeks to suppress any such localized rib forming action or striation by insulating the expandable segments held within the insulating sleeve. Furthermore, there is no recognition that simultaneous expansion and insertion of the expandable plug can further control stretch distribution in the cup wall, by modifying the geometric interaction of the plug with the stretching sheet as primary draw is being carried out.

FR—A—1 238 800 discloses the use of movable projections of tips which first contact the molten sheet at predetermined points, constrain it during primary or longitudinal stretching, and are then expanded to complete the stretching. The purpose the tips is to constrain and direct the initially unstretched material into its final position after stretching. Only the most extreme parts of the forming (i.e. the corners of a hollow cube) are to be contacted by the tips and it is proposed that thinning out of the extremities of the forming will be reduced by the action of the tips. Only the points or tips of the blades or keys remain in contact with the sheet, and the edges of the blades or keys can thus exert no direct influence over the thickness distribution in the walls of the container. There is thus no intention of progressively forming wall and stretch controlling thicker ribs using the edges, whether the tool is expanded simultaneously with primary draw, or after primary draw.

US—A—3 078 025 claims a method for selectively prechilling the molten flat sheet material before stretching, so that the final stretched article has selectively thickened areas which enhance its structural performance.

The selective chilling of the hot sheet is carried out before any stretch begins rather than progressively during stretching and is not intended to be for the purpose of better controlling average stretch distribution in the final article.

It has now been discovered that if the sheet is stretched initially by a primary movement of the stretching tool having an end which engages the sheet during stretching and provided the end is cold enough to prevent the sheet sliding over the end during stretching then if the cold end comprises an array of twelve (preferably thirty) or more neighbouring outwardly separable cold tips and the initially stretched sheet is dilated by an outwards separation of the tips and/or if the initially stretched sheet is dilated at least partially simultaneously with the continued primary movement of the stretching tool, then it is possible to achieve greater control of the stretching of the sheet.

When using a stretching tool comprising twelve or more cold tips, it has been discovered that the stretching of the base of a hollow article can be controlled independently of the streching of the side walls and in particular a more positive control of the stretching of the base is possible. Also the stretching process is less sensitive to fluctuations in temperature and often may be performed usefully in line on polyolefin sheet being extruded from a slit die even though the extruded sheet may travel to the stretching tool via conventional intermediate apparatus such as polishing rolls. It has also been discovered that by using a multiplicity of opposed stretching tools it often becomes possible to dispense with the usual means such as clamping rings for holding the sheet against non-stretching movement. Elimination of clamping rings usually reduces trimming waste to well below 15% and also permits faster stretch forming cycles.

Accordingly this invention provides a method of stretch-forming a hollow article from a sheet of thermoplastic material at a temperature higher than 25°C below the melting point and held against substantial non-stretching movement comprising pressing against one face of the sheet in a primary movement a plurality of tips carried symmetrically by a tool at a temperature lower than 50°C below the melting point of the sheet and comprising a plunger having an axis extending in the direction of the primary movement, each tip being constituted by an end of a blade which blade is coplanar with the plunger axis and pivoted to the plunger, and, while continuing the primary movement, rotating the blades about the pivots while maintaining the blades coplanar with the plunger axis to symmetrically separate the tips in directions transverse of the plunger and to bring the outer edge of each blade from the tip progressively towards the rear into engagement with the sheet.

A modification of the invention provides a method of stretch-forming a hollow article from a sheet of heated thermoplastic material comprising arranging a plurality of elongated blades around a given axis and coplanar with the axis, each blade having a tip at one end and an outer edge facing away from said given axis; moving the blades parallel to said given axis so that the tips of the blades press against and begin to stretch the sheet of thermoplastic material, and, while continuing such axial movement, rotating each blade about an axis transverse to said given axis in a manner to swing the tips of the blades away from said given axis and to bring the outer edges of the blades into engagement with the adjacent stretched portion of the sheet.

As the tips touch the sheet, each chills a blob of hot plastics material against which it presses and it is found that the chilled blob firmly engages the tip during stretching and prevents substantial sliding of the sheet over the tip. It is also found that each blob results in an even transmission of stretching forces to the sheet especially when dilation accompanies a continued primary movement of the stretching tool. This may be because a zone of intermediately chilled material exists between each blob and the remainder of the sheet which acts like a spring in smoothing out local and temporary uneven tensions arising from slight inhomogeneities in the thermoplastics material. The chilled blobs are also able to resist pucture by the tip even though the tip is preferably needle sharp. The use of sharp tips produces very small blobs (e.g. 0.5 to 2 mm wide) leaving nearly all the stretchable sheet free to stretch out of contact with the stretching tool and this promotes a more controlled thinning of the sheet. The chilled blobs themselves suffer less stretching and therefore less thinning than other portions of the sheet so that the perimeter of the base of the hollow article is marked by blobs of less stretched plastics material. Accordingly this invention also provides a stretch-formed deep-drawn hollow thermoplastics container comprising a base and side wall characterised in that the perimeter of the base is marked by twelve or more blobs of less stretched thermoplastics material. Usually the blobs are virtually unstretched and unthinned.

In order to ensure adequate chilling of the blobs, it is necessary to ensure that an adequate temperature differential exists between the tip and the heat-softened sheet. In the case of most commonly available thermoplastics materials this can be achieved by using cold (e.g. below 80°C and preferably room temperature) tips and heat-softened sheets heated for example to 25°C below the melting point of the thermoplastics material or to higher temperatures. It may be preferable to operate with lesser temperature differentials, for example to avoid or reduce the need to cool the tips between cooling cycles but the tips should be at least 20°C (preferably at least 40°C) colder than the sheet at the start of initial stretching. The size of the minimum temperature differential will depend on the nature of the plastics material, the thickness of the sheet, the shape and size of the tips, the specific heat and thermal conductivity of the material from which the tips are made (metals are preferred for organic thermoplastics materials) and the speed at which the sheet is stretched by the primary movement of the stretching tool and (in the case of a tool having an array of tips) by the extent of separation of the tips during dilation. Useful temperatures for various thermoplastics materials are given by AU 460 849.

When the thermoplastics material is inorganic glass care must be taken to avoid damaging the glass due to thermal shock between the cold tips and the hot sheet. The tip must be able to chill the glass without causing excessive thermal stress. However, when the tips are made from materials such as graphite or materials having similar thermal conductivity, temperature control is not as highly critical as when materials of high conductivity such as metals are used.

Preferably the sheet should be from 0.015 to 4 (especially 0.5 to 2.0) mm thick.

When a tool having an array of tips is used, saddles of heat-softened material form between neighbouring tips during initial stretching of the sheet. Because the sheet does not slide substantially over the tips the material inboard of these saddles is virtually unextended during initial stretching whereas material outboard of the saddles (which forms the side walls of the hollow article) stretches in direct proportion to the extent of the initial movement of the stretching tool. Therefore, stretching of the side walls can be positively controlled independently of stretching of the base. Separation of the tips stretches material inboard of the saddles to dilate the initially stretched sheet and form the base of the hollow article. Therefore, stretching of the base is positively controlled being directly proportional to the extent of separation of the tips. Also the positioning of the tips around the base provides a more localised control on the stretching of the base.

At the cost of increasing the area of contact between the sheet and the stretching tool, a more positive influence on the shape of the article especially the side walls can be achieved by using tips each of which is located to one end of an edge and during dilation the edges are brought into contact with the sheet. In this way the edges can be used to define for example a slanting or vertical side wall comprising twelve or more contiguous longitudinal panels bounded longitudinally by lines of less stretched thermoplastics material each extending from a blob of less stretched material located on the perimeter of the base of the hollow article. The lines of thicker material act as reinforcing ribs. The path of the blades can be designed so as to give a predetermined length of contact between blades and material. This in conjunction with the time of contact and the area of chilling at the blade/material interface controls the thickness of the rib. In general, it is preferred to produce the thickest possible rib, and the rib to wall thickness ratio should preferably exceed 1.5. Preferably the edges comprise sharp knife edges so that the increase in area of contact between the sheet and stretching tool has less effect on the freedom of the sheet to stretch.

Separation of the knife edges also stretches the material of the side walls transversely to the stretch imparted by the initial stretching of the sheet and this stretching is controlled positively and locally by the extent of separation of the knife edges. Accordingly, when the sheet comprises a crystalline plastics material at a temperature below (preferably 15°C or less below) its crystalline melting point, the initial stretching imparts a longitudinal orientation to the material of the side wall and the separation of the tips and edges imparts a transverse orientation to the material of the base and side wall with the result that the side wall becomes biaxially orientated and hence its hoop strength is improved.

When making cups it is preferred that each tip when fully separated be spaced 2 to 20 (especially 6 to 12) mm from its adjacent neighbours.

Further the invention provides an apparatus for stretch forming a deep drawn hollow article from a heat-softened sheet of thermoplastic material, said apparatus comprising means to hold the sheet against substantial non-stretching movement, a stretching tool having an end for engaging the sheet and means to cause a primary movement of the stretching tool relative to the sheet so as to cause the end to press against the sheet and to stretch the sheet, the apparatus also comprises means to continue the movement of the stretching tool in the direction of its primary movement and the stretching tool comprises a plurality of flat segments or blades, with tips to initially engage said sheet and edges to progressively contact said sheet as primary movement proceeds and means to cause the progressive relative separation of each segment or blade with respect to each other segment or blade as such primary movement proceeds.

Means for holding the heat-softened sheet against substantial non-stretching movement include conventional clamping rings as used in vacuum-forming processes. Alternatively, the ring may be replaced by an array of projections. Where a multiplicity of hollow articles are to be made, they may be stretched simultaneously from the same sheet by a multiplicity of opposed stretching tools all moving simultaneously against opposite faces of the sheet and it is usually possible to avoid the use of clamping rings.

The problem of inwards bowing of the sheet is minimised by the use of stretching tools comprising twelve or more tips and knife edges and acceptable polyhedral cups can be made without the need to dilate by means of fluid pressure. However, the existence of the blobs and ribs of thickened material is emphasised by the polyhedral cross-section of the cup and if this is considered unsightly any inwards bowing can be easily counteracted by using thicker sheet or a subsequent auxiliary dilation by means of fluid pressure. Preferably, auxiliary dilation is performed with the stretched article positioned in a cavity mould which defines the final outer shape of the article. Usually auxiliary dilation is performed to an extent just sufficient to remove the angularity of the cup and preferably increases the length of the ribs by less than 5% and generally by less than 2%.

However, it is also possible to biaxially orientate the containers further by auxiliary dilation because the ribs serve as reservoirs of material which control the delivery of material during both longitudinal and transverse auxiliary stretching.

Suitable thermoplastics materials include thermosetting materials such as cross-linkable polyethylene but preferably thermoplastics materials are chosen, for example:

a) high impact polystyrenes;
b) aliphatic (preferably crystalline) polyolefins including poly-4-methyl pentene-1, polybutenes, low, medium, and high density polyethylenes or copolymers of ethylene with vinyl alcohol, vinyl acetate, acrylic or methacrylic acids or their methyl, propyl, ethyl or butyl esters or homopolymers of propylene or copolymers of propylene with up to 30% (by weight of the copolymer) of ethylene and preferably the ethylene and propylene polymers should have a melt flow index of between 0.1 to 8 g/10 minutes as measured according to British Standard 2782 Part 1/105C of 1970 except that in the case of polymers containing a major amount by weight of propylene, a temperature of 230°C is used instead of 190°C;
c) thermoplastic copolymers of acrylonitrile, butadiene and/or styrene and rubbery copolymers of ethylene and propylene such as those described by, in an article by L. M. Glanville in "Chemistry and Industry" 16 March 1974 pages 255 to 257 (the contents of which are herein incorporated by reference) especially when diene modified using dienes such as 1,4-hexadiene, dicyclopentadiene or methylene or ethylidene norbornenes and in particular blends of such rubbers with polypropylenes;
d) polyesters such as the condensates of ethylene glycol or tetramethylene glycol or 1,1-(dihydroxymethyl) cyclohexane with terephthalic acid or mixtures of terephthalic acid and isophthalic acid;
e) polyamides including nylons 66, 610, 6 and 11;
f) polyvinyl chloride and copolymers of vinylidene chloride;
g) inorganic glasses including soda or borosilicate glass; and
h) supercooled liquid sugar solution such as toffee.

The plastics materials may contain mineral or cellulosic additives such as talc, chalk, limestone, dolomite, barytes, clay, mica, pulverised fuel ash (also called fly ash), slate flour or wood flour.

The invention is illustrated by the following specific embodiments described with reference to the drawings of which:
Figure 1 is a perspective view of a stretch-formed cup having a scalloped perimeter around its base.

Figures 2 and 3 are sections on a larger scale on lines A—A and B—B respectively shown in Figure 1.

Figures 4, 5 and 6 are perspective views with part in section of a stretching tool (showing only four blades for simplicity) and a heat-softened sheet showing the tool before, during and after its primary movement against the sheet.

Figure 7 is a plan view on a smaller scale of the blades as shown in Figure 4.

Figures 8 and 9 are sections on a larger scale on lines C—C and D—D respectively as shown in Figure 4.

Figure 10 is a plan of a stretching tool comprising a rectangular array of six pairs of blades.

Figure 11 is a section of alternative apparatus for making a cup.

Figure 12 is an underneath plan in the direction of the arrow G in Figure 11.

Figures 13 to 16 are views similar to Figure 11 showing successive stages in the formation of the cup.

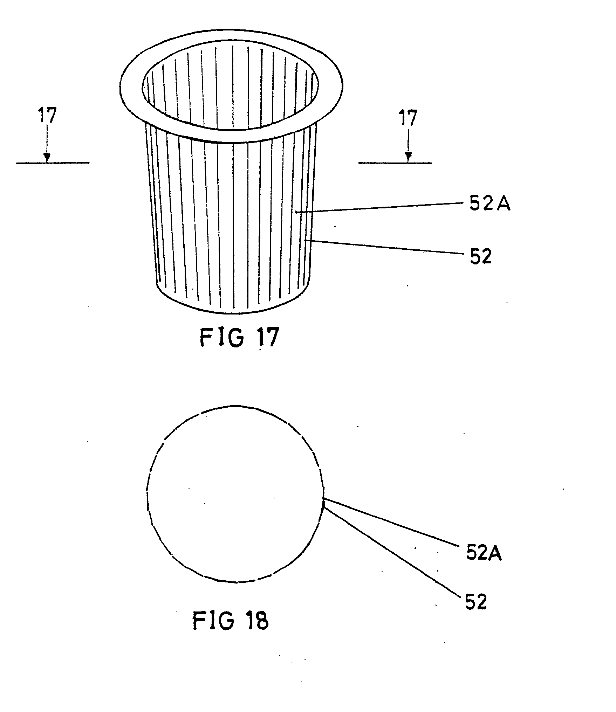

Figure 17 is a perspective view of a modified cup.

Figure 18 is an underneath plan view of the cup shown in Figure 12, in the direction of the arrow G.

Figure 19 is a plan diagram of an arrangement whereby a multiplicity of interpenetrating tools cooperate to simultaneously produce a multiplicity of cups.

Figure 20 is a diagrammatic cross-section through Figure 19 on the line H—H.

Figure 21 is a sectional elevation of portion of a modified apparatus.

Figure 22 is a perspective view of a jar produced by the apparatus of Figure 21.

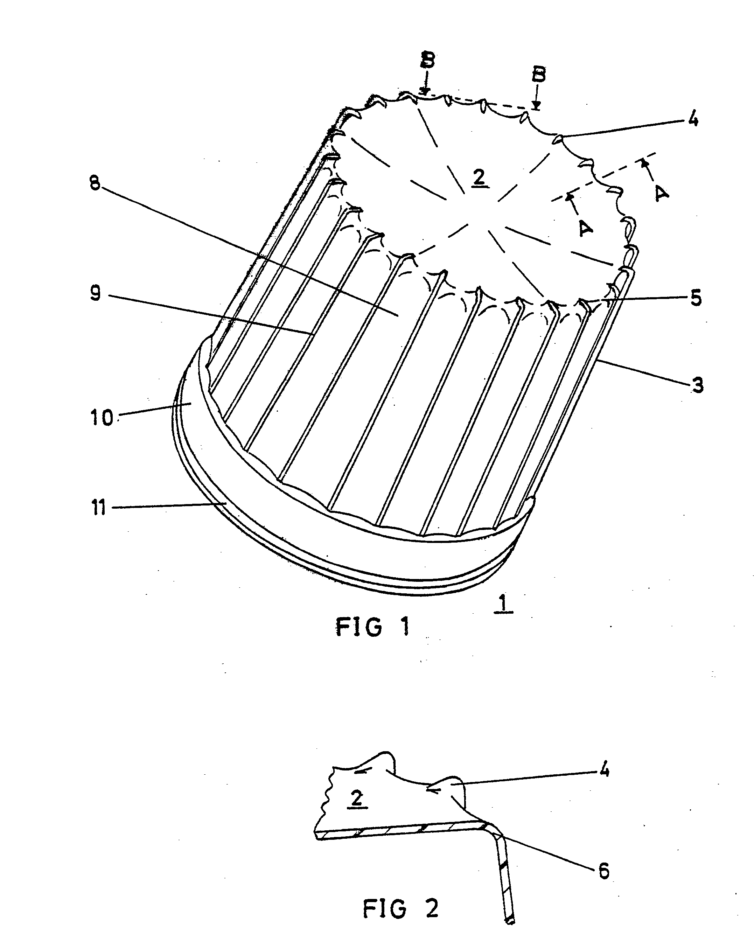

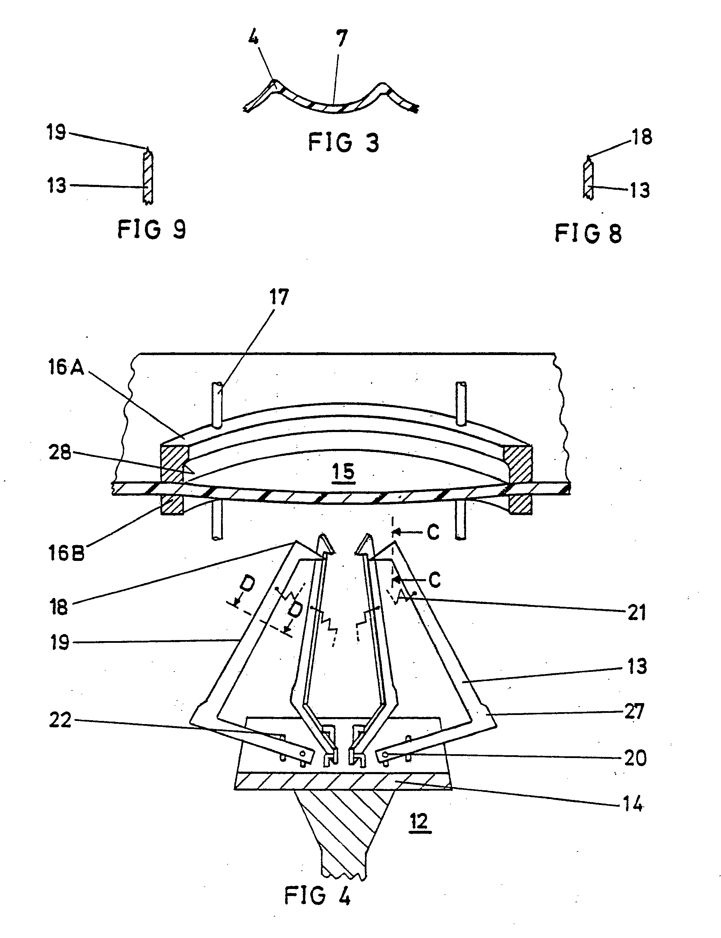

Figure 1 (not to scale) shows a cup 1 in which is 105 mm in open end diameter and 65 mm deep and which has been stretch-formed from an 0.8 mm thick sheet of crystalline polypropylene. Cup 1 is essentially frustro-conical in shape having approximately circular base 2 and an outwardly sloping side wall 3. The perimeter of base 2 is marked by short thin blobs 4 of virtually unstretched plastics material which are 1 mm wide, extend 5 mm radially inwardly of the perimeter and stand 0.5 mm proud of the adjacent surface of base 2. For clarity, the drawings exaggerate blobs 4 and show only 24 blobs whereas 36 blobs would be preferred for a cup of this size. Blobs 4 are spaced equally apart by doubly radiussed scallops 5 consisting of orthogonally radiussed curves such as curves 6 and 7 as shown in Figures 2 and 3 respectively.

Side wall 3 consists of slightly concave longitudinal contiguous panels 8 and longitudinal ribs 9 each of which extends from a blob 4 along the boundary between a pair of contiguous panels 8. Ribs 9 are composed of virtually unstretched material and are therefore thicker than panels 8. Side wall 3 terminates in a stepped out rim 10 carrying an accurately stamped flange 11 to which a suitably rimmed lid may be snap-fitted.

The crystalline polypropylene of base 2 is uniaxially orientated in directions radial of base 2 and has a good and controlled uniformity of thickness. The crystalline polypropylene of panels 8 is biaxially orientated in the longitudinal and circumferential directions and the circumferential orientation confers improved hoop strength on cup 1. The crystalline polypropylene of panels 8 has a good and controlled uniformity of thickness. Ribs 9 help to resist vertical crushing forces when several cups 1 are stacked. Cup 1 can be made using the method and apparatus illustrated by Figures 4 to 9 except that for simplicity Figures 4 to 7 show only four blades.

Figure 4 shows a stretching tool 12 comprising blades 13 and thrust rod 14 positioned below a heat-softened and therefore slightly dished sheet 15 of crystalline polypropylene. Sheet 15 is held against substantial non-stretching movement by retractable opposed clamping rings 16A and 16B held stationary by rigid supports 17.

Stretching tool 12 has an array of eighteen (only three shown) pairs of rotatable opposed neighbouring cranked blades 13 disposed along the diagonals of a rectangular polyhedron. Each blade 13 has a cold tip 18 (as shown in Figure 8) located at the end of a cold knife edge 19. Knife-edge 19 is shown in Figure 9. Each blade 13 is rotatable about a pivot 20 mounted on thrust rod 14. Blades 13 are lightly biassed by springs 21 to a central position against stops 22 such that in the central position each pivot 20 remains inboard of the locus of unseparated tips 18. Rotation of blades 13 against the bias separates each tip 18 and each knife 19 both radially outwardly and also circumferentially from its neighbours.

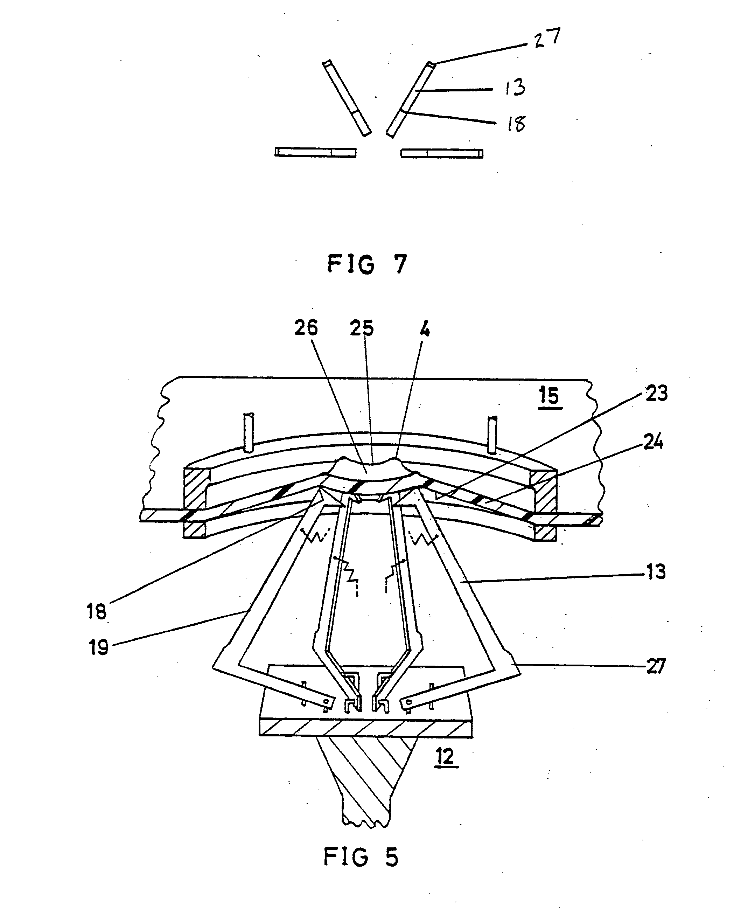

A primary movement vertically upwards of tool 12 presses cold tips 18 against under-face 23 of sheet 15 and chills blobs 4 of polypropylene against which tips 18 press. Blobs 4 are then able to resist pucture by tips 18. After taking up the slack arising from the slight dishing of sheet 15, further primary movement of tool 12 imparts an upwards initial stretch to portion 24 of sheet 15 outboard of tips 18 and creates saddles 25 as shown in Figure 5. So far virtually no stretching of portion 26 of sheet 15 inboard of saddles 25 occurs. Initial stretching generates an increasing tension in outboard portion 24 and consequently an increasing reaction is exerted on tips 18. The increasing reaction on each tip 18 applies an increasing moment (or leverage) to blade 13 which is counter to the biassing moment from spring 21. As soon as the increasing moment exceeds the biassing moment, blades 13 rotate outwards against the bias causing tips 18 to separate radially outwards in directions transverse to the direction of the primary movement of tool 12 and accordingly tips 18 stretch and orientate inboard portion 26 radially outwardly and so mechanically dilate the initially stretched sheet 15. Completion of the upwards initial movement of tool 12 removes the tension from outboard portion 24 and virtually simultaneously stops the dilating movement of tips 18.

During dilation, knife edges 19 come into contact with outboard portion 24 and create and chill ridges 9 enabling them to receive and transmit circumferential stretching and orientating forces from knife edges 19 as dilation proceeds. The circumferential stretching is again in a direction transverse to that of the primary movement of tool 12. At the same time, knife edges 19 (which are slanted) impose their slant on ribs 9 and so exert a positive control on the shape of side wall 3 and in particular they reduce its tendency to bow inwardly.

Blades 13 are provided with protruding heels 27 which co-operate with a corresponding rebate 28 in top clamping ring 16A to impress a stepped out rim 10 into the extremity of outboard portion 24. Sheet 15 turns under clamping ring 16A where it remains virtually unstretched and thick. On allowing sheet 15 to cool, the thicker portion between rings 16 becomes very rigid and permits accurate stamping which frees the stretch-formed cup from sheet 15 and creates a flange 11 for receiving a snap-fitting lid.

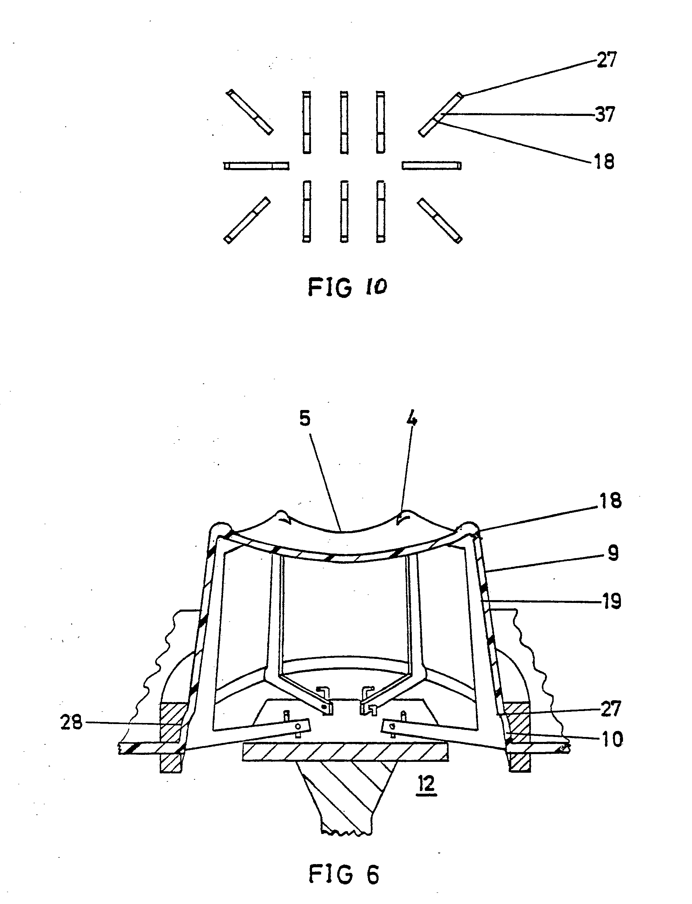

Figure 10 shows an array of six pairs of opposed blades 13 for making a rectangular cup.

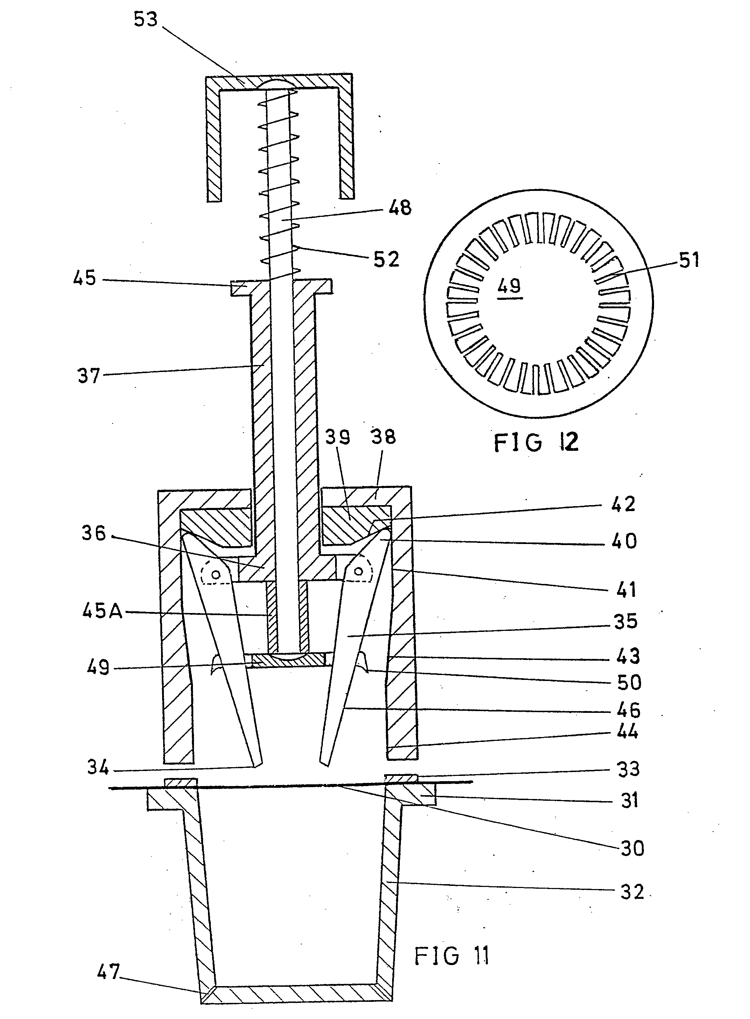

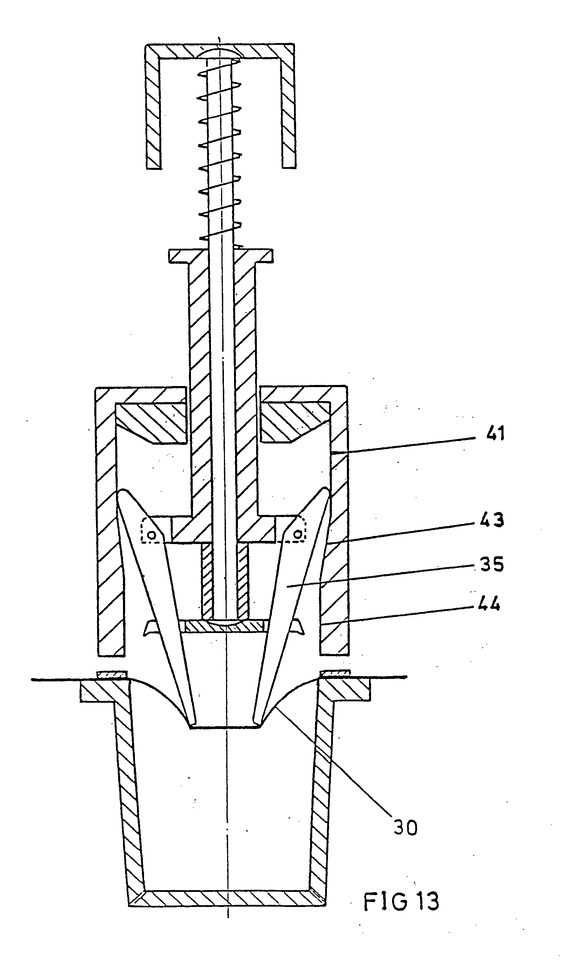

Figure 11 shows a 0.8 mm thick heat-softened polypropylene sheet 30 clamped onto rim 31 of cavity mould 32 by clamping ring 33 which prevents non-stretching movement of sheet 30. Also shown is apparatus for stretching sheet 30 comprising a stretching tool having thirty-six cold tips 34 (only two shown) each located to one end of a 1 mm thick steel blade 35 rotatably mounted on flanged end 36 of a spindle 37 whose flanged end 36 is housed within a hollow cylindrical guide 38. Spindle 37 is slidable in a central annular bearing 39 so that it can be advanced further into guide 38 to give tips 36 a primary movement which presses them against sheet 30 causing initial stretching as shown in Figure 13.

Tips 34 are biassed to their central position shown in Figure 11 by springs (not shown) acting on blades 35. The springs also bias ends 40 of blades 35 remote from tips 36 against internal surface 41 of guide 38 and initially this bias is assisted by chamfered edge 42 of bearing 39 which also urges ends 40 against internal surface 41.

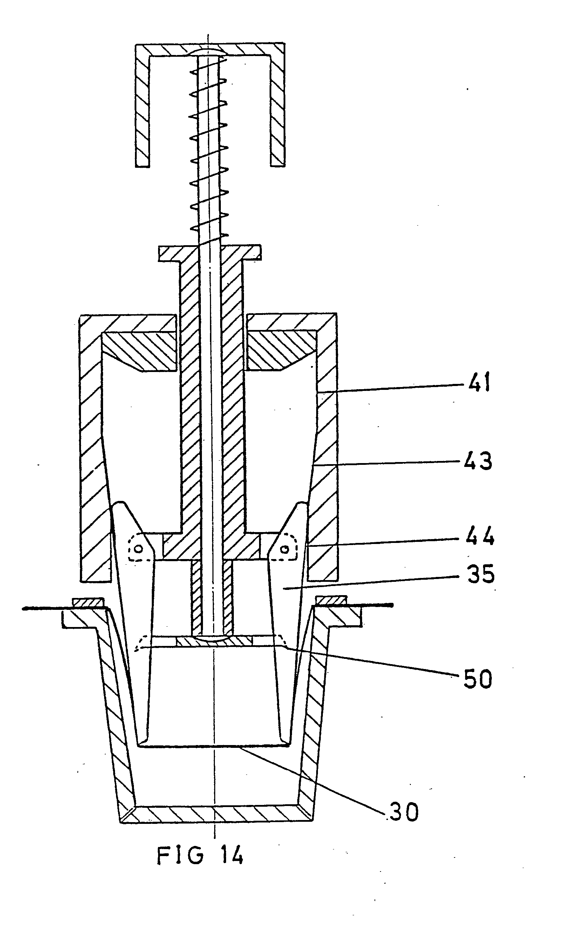

During the primary advance of spindle 37 into guide 38, ends 40 follow internal surface 41 and so no outwards separation of tips 36 occurs and hence no dilation of initially stretched sheet 30 occurs. As shown in Figure 14 continued advance of spindle 37 causes ends 40 to follow inwardly extending internal surface 43 of guide 38 which acts as a cam and rotates blades 35 so that tips 34 separate outwardly in directions transverse to their primary movement. This outwards separation occurs simultaneously with the continued advance of spindle 37 so that the initially stretched sheet 30 as shown in Figure 13 is then dilated while it is being further stretched in the direction of the primary movement of tips 36.

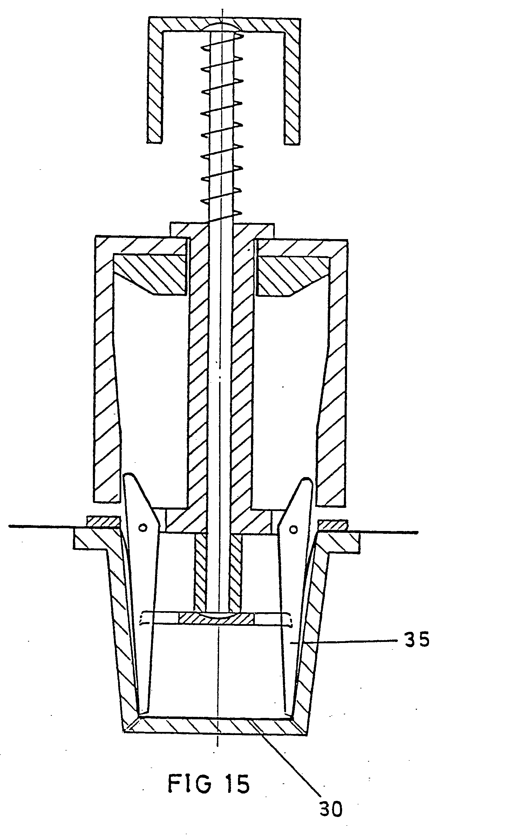

As shown in Figure 15 further continued movement of spindle 37 causes ends 40 to follow internal surface 44 which provides a positive limit to the outwards separation of tips 36 and hence a positive limit to the extent of mechanical dilation of stretched sheet 30 as shown in Figure 14. A positive limit to the extent of stretching in the direction of the primary movement of spindle 37 is provided by stop 45 formed on spindle 37 which engages guide 38 to prevent any further advance of spindle 37. The diameter of internal surface 44 and the positioning of stop 45 are chosen so as to ensure that ribs and blobs formed by edges 46 of blades 35 and by tips 34 respectively make a comfortable fit in cavity mould 32 which has air vents 47 to facilitate close fitting. Cooling the stretched sheet 30 at this stage would produce an acceptable polyhedral cup, however, it is possible to refine the shape of the cup further.

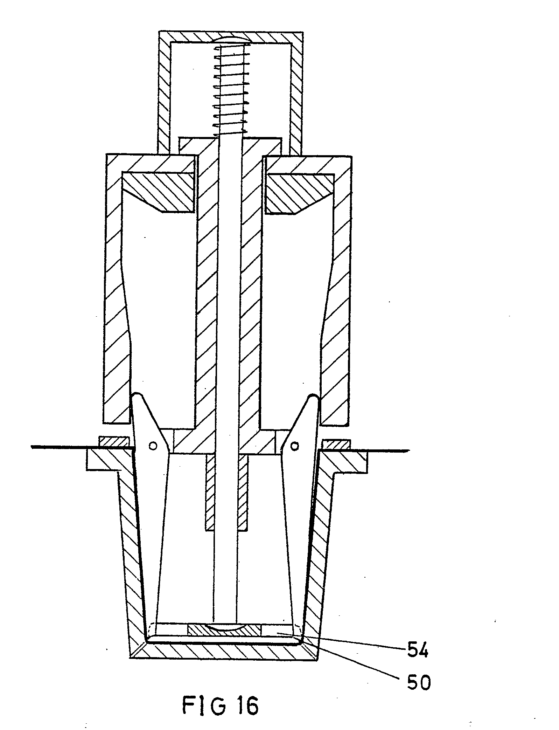

In particular, the apparatus shown in Figure 11 additionally comprises bell-headed plunger 48 slidably mounted in spindle 37 and terminating in radially extending plate 49 having cold sharp dependent circumferential rim 50. As shown in Figure 12, plate 49 contains apertures 51 to allow free passage of plate 49 relative to blades 35. Plunger 48 is initially spaced from spindle 37 by spring 52 reacting between stop 45 and bell-head 53. Total separation of spindle 37 and plunger 50 is prevented by stop 45A formed on plunger 50. As shown in Figure 16, when stop 45 engages guide 38 to limit further advance of spindle 37, sufficient force on bell-head 53 causes both a compression of spring 52 and an advance of plunger 48 towards sheet 30 until rim 50 of plate 49 presses against and chills the perimeter 54 of the base of stretched sheet 30. Chilled perimeter 54 and chilled ribs (not shown) confer sufficient form stability on the stretched sheet 30 to permit it to be blown off the stretching tool while the unchilled portions of sheet 30 are still hot enough to be stretched by fluid pressure. Accordingly, cavity mould 32 containing stretched sheet 30 can be quickly moved to a fluid pressure stretching station where conventional means can be used to blow or vacuum form the stretched sheet into shape-defining engagement with mould 32. In this way the polyhedral cross-section of the cup can be made more circular by an outwards dilation of the longitudinal panels 52A to meet the circle defined by the locus of the ribs 52 so reducing the prominence of the ribs 52 to produce a cup suited to printing by resilient mat transfer processes. Optionally, the cup can be further dilated to produce a more circumferentially orientated product having better hoop strength at the cost of thinning the ribs and reducing their crush resistance.

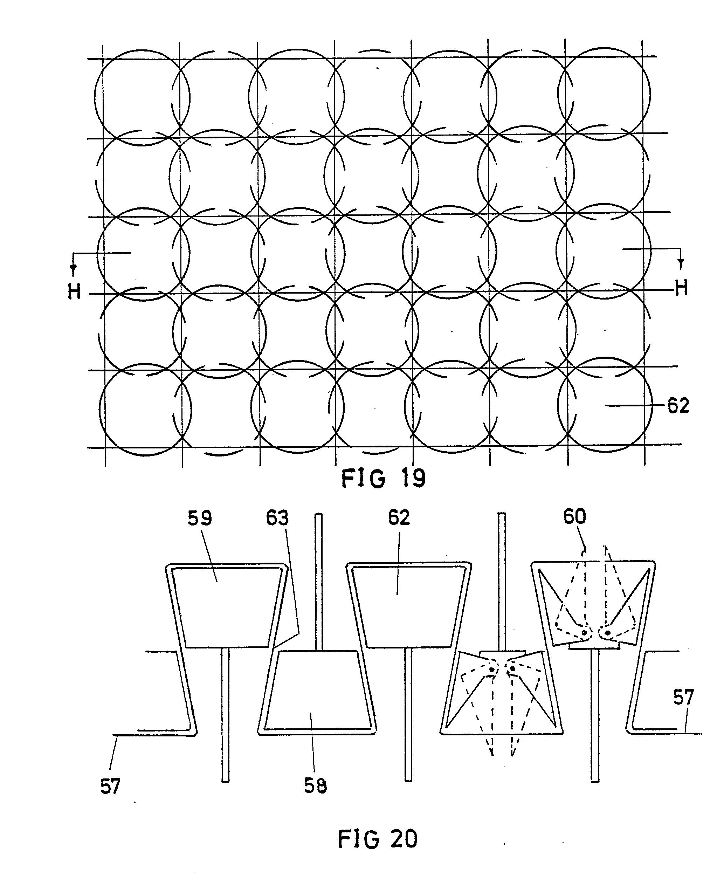

Figures 19 and 20 illustrate the stretch-forming of a sheet 57 by opposed groups of stretching tools 58 and 59 arranged so that tools 58 are staggered relative to tools 59. Initially, tools 58 and 59 are spaced apart to allow insertion of sheet 57 between them and then their primary movements cause them to press against sheet 57 whereupon it is held against non-stretching movements without the need to employ separate holding means. Primary movement in unison of tools 58 and 59 causes them to interpenetrate and when tools 58 and 59 have interpenetrated sufficiently to clear each other, their tips 60 (shown prior to separation in dashed lines) are separated to dilate initially stretched sheet 57 to form cups 62 as shown in Figure 20. Because no clamping rings are needed, rims 63 of cups 62 can be mutually overhanging as shown in Figure 19 so allowing a greater number of cups 62 to be formed from a given area of sheet 57. The method illustrated by Figures 19 and 20 is especially suitable for use on sheets of crystalline polypropylene arriving in-line from a slit extrusion die via a stack of polishing rolls. Production rates of over 100,000 cups per hour are expected to be possible.

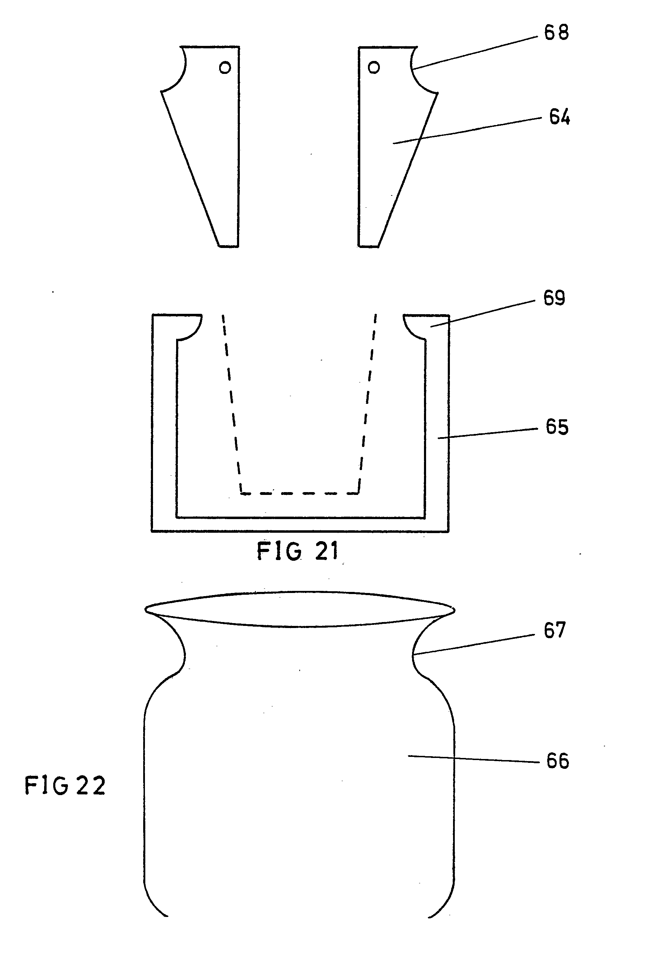

Figure 21 shows modified apparatus for forming a jar 66 shown in Figure 22 having an undercutting neck 67. The apparatus is modified by the provision of curved rebates 68 on blades 64 and re-entrant annular flange 69 on mould 65 which co-operates with rebates 68 to define neck 67.

A suitable polypropylene for making cups illustrated in the drawings has a melt flow index of 1.5 g/10 minutes and is a sequential copolymer of propylene with 13% (by weight of the copolymer) of ethylene made by injecting ethylene into the closing stages of an otherwise homopolymerisation of propylene. The sheet polypropylene is heated to a temperature of 160°C and the tips and knife-edges of the stretching tools are heated to 100°C.

Example 1

A plain polystyrene cup weighing 14.95 g and having a wall thickness varying between 0.5 mm and 0.3 mm was tested and found to have a crush load of 37 kg. A ribbed cup according to the present invention, weighing 14.75 g but otherwise identical had a crush load of 42 kg, i.e. 13% greater.

It was found that a polystyrene tub having a wall thickness of 0.2 mm and a rib thickness of 0.75 mm has the same stiffness as a tub of the same overall dimensions but 30% heavier. Considerable savings of material are therefore possible with the process and apparatus of this invention.

Example 2

A tool as illustrated in Figure 10 was fitted in place of the usual draper plug on a "Kaberit" thermoforming machine. A top die comprising a vented mould for 500 ml cups was left unchanged. The tool was approximately $\frac{1}{2}$ mm smaller in depth and opened diameter than the vented cavity. Cups were formed at 17 cycles/minute compared to the usual commercial speed of 11 cycles/minute. The following savings were measured:

(a) material saving due to wall stiffness improvement —4.8%
(b) material saving due to thinner bases with more uniform caliper—6.1%
(c) the process was found to provide a far more consistent product than drape-plug thermoforming, hence economy due to reduced allowance for variation was about 7%.

These savings in materials total nearly 18% by weight.

It was found that the residence time on the steel knife edges was so brief that the chill ribs only contributed about 15% increase in wall thickness for equivalent weight. The cups were test printed on conventional transfer printing equipment. Slightly heavier contact pressures were required between the rubber mat and the supporting mandrel, to achieve a print of normal quality.

Air pressure to blow off the parison averaged 0.28 MN/m² (i.e. 40 psi) and gave excellent embossing details as engraved in the vented mould.

Variation of draw time, knife edge mass and temperature were found to permit control of rib weight within wide limits.

The minimum number of twelve tips specified for a stretching tool having separable tips is directed to cups of conventional size or larger. For smaller cups, a smaller number of tips may be used provided that each tip is less than ten times the average thickness of the ribs (or blob if no ribs are present) from its neighbouring tip.

**Claims**

1. A method of stretch-forming a hollow article from a sheet of thermoplastic material at a temperature higher than 25°C. below the melting point and held against substantial non-stretching movement comprising pressing against once face of the sheet in a primary movement a plurality of tips carried symmetrically by a tool at a temperature lower than 50°C. below the melting point of the sheet and comprising a plunger having an axis extending in the direction of the primary movement, each tip being constituted by an end of a blade which blade is coplanar with the plunger axis and pivoted to the plunger, and, while continuing the primary movement, rotating the blades about the pivots while maintaining the blade coplanar with the plunger axis to symmetrically separate the tips in directions transverse of the plunger and to bring the outer edge of each blade from the tip progressively towards the rear into engagement with the sheet.

2. A method according to claim 1, wherein the blades are pivoted intermediate their length, and are rotated by the action of a cam upon each blade at the end remote from the tip.

3. A method of stretch-forming a hollow article from a sheet of heated thermoplastic material comprising arranging a plurality of elongated blades around a given axis and coplanar with the axis, each blade having a tip at one end and an outer edge facing away from said given axis; moving the blades parallel to said given axis so that the tips of the blades press against and begin to stretch the sheet of thermoplastic material; and, while continuing such axial movement, rotating each blade about an axis transverse to said given axis in a manner to swing the tips of the blades away from said given axis and to bring the outer edges of the blades into engagement with the adjacent stretched portion of the sheet.

4. A method as in claim 3 wherein the blades are initially inclined relative to said given axis such that the tip ends of the blades are closer to said given axis than are the opposite ends of said blades.

5. A method according to any one of the preceding claims wherein the hollow article so initially formed is immediately further shaped into a cavity mould by the application of a fluid pressure differential transversely of the said sheet.

6. Apparatus for stretch-forming a deep drawn hollow article from a heat-softened sheet of thermoplastic material, said apparatus comprising means to hold the sheet against substantial non-stretching movement, a stretching tool having an end for engaging the sheet and means to cause a primary movement of the stretching tool relative to the sheet so as to cause the end to press against the sheet and to stretch the sheet, the apparatus also comprises means to continue the movement of the stretching tool in the direction of its primary movement and the stretching tool comprises a plurality of flat segments or blades, with tips to initially engage said sheet and edges to progressively contact said sheet as primary movement proceeds and means to cause the progressive relative separation of each segment or blade with respect to each other segment or blade as such primary movement proceeds.

7. Apparatus according to claim 6 wherein the means to hold the sheet incorporates a cavity mould into which said stretching tool is entered, together with means of providing differential fluid pressure to further dilate the formed article after all longitudinal and outward movement of the segments or blades has ceased.

**Patentansprüche**

1. Verfahren zum Streckformen eines hohlen Gegenstandes aus einer Folie aus thermoplastischem Material, das eine Temperatur von mehr als 25°C unter dem Schmelzpunkt hat und gegen eine wesentliche Nicht-Streckbewegung gehalten wird, bei welchem gegen eine Seite der Folie in einer ersten Bewegung eine Vielzahl von spitzen angedrückt wird, die symmetrisch an einem Werkzeug angeordnet sind, das eine Temperatur von weniger als 50°C unter dem Schmelzpunkt der Folie hat und einen Tauchkolben aufweist, der eine in Richtung der ersten Bewegung verlaufende Achse hat, wobei jede Spitze durch ein Ende eines Messers gebildet wird, das in einer mit der Tachkolbenachse gemeinsamen Ebene liegt und an dem Tachkolben drehbar gelagert ist, und bei welchem während der ersten Bewegung die Messer um ihre Drehpunkte gedreht werden, während die Messer in dermit der Tauchkolbenachse gemeinsamen Ebene gehalten werden, um die Spitzen in Richtungen quer zum Tauchkolben symmetrisch auseinander zu bewegen und um die äußere Kante jedes Messers von der Spitze fortschreitend nach hinten in Eingriff mit der Folie zu bringen.

2. Verfahren nach Anspruch 1, wobei die Messer in der Mitte ihrer Längenausdehnung drehbar gelagert sind und durch die auf jedes Messer an dem von der Spitze entfernt liegenden Ende ausgeübte Wirkung eines Nockens gedreht werden.

3. Verfahren zum Streckformen eines hohlen Gegenstandes aus einer Folie aus erhitzem thermoplastischem Material, bei welchem eine Vielzahl von länglichen Messern um eine vorgegebene Achse und in einer mit der Achse gemeinsamen Ebene angeordnet wird, wobei jedes Messer eine Spitze an einem Ende und eine äußere Kante hat, die von der vorgegebenen Achse abgekehrt ist, bei welchem die Messer parallel zu der vorgegebenen Achse bewegt werden, so daß die Spitzen der Messer gegen die Folie aus thermoplastischem Material drücken und beginnen, sie zue strecken, und bei welchem während dieser Axialbewegung dieses Messer um eine quer zu der vorgegebenen Achse liegende Achse in der Weise gedreht wird, daß die Spitzen der Messer von der vorgegebenen Achse weggesschwenkt und die äußeren Kanten der Messer in Eingriff mit dem angrenzenden gestreckten Teil der Folie gebracht werden.

4. Verfahren nach Anspruch 3, wobei die Messer bezüglich der vorgegebenen Achse anfänglich geneigt sind, derart, daß die Spitzenenden der Messer näher an der vorgegebenen Achse als die entgegengesetzten Enden der Messer sind.

5. Verfahren nach einem der vorhergehenden Ansprüche, wobei der anfänglich so geformte Gegenstand sofort weitergeformt wird, indem er durch Anlegen einer Fuiddruckdifferenz quer zur Folie in einem Formhohlraum gedrücket wird.

6. Vorrichtung zum Streckformen eines tiefgezogenen hohlen Gegenstandes aus einer durch Hitze erweichten Folie aus thermoplastischem Material, mit einer Einrichtung zum Halten der Folie gegen eine wesentliche Nicht-Streckbewegung, einem Streckwerkzeug, das ein Ende zur Anlage an der Folie hat, und einer Einrichtung zum Erzeugen einer ersten Bewegung des Streckwerkzeuges relativ zu der Folie, um das Ende gegen die Folie zu drücken und die Folie zu strecken, wobei die Vorrichtung auch eine Einrichtung zum Fortsetzen der Bewegung des Streckwerkzeuges in der Richtung seiner ersten Bewegung aufweist, und das Streckwerkzeug eine Vielzahl von flachen Segmenten oder Messern mit Spitzen zum anfänglichen Angreifen an der Folie und Kanten zum fortschreitenden Berühren der Folie während der Fortsetzung der ersten Bewegung und eine Einrichtung zum Erzeugen der fortschreitenden relativen Auseinanderbewegung jedes Segments oder Messers bezüglich jedes anderen Segments oder Messers während der Fortsetzung der ersten Bewegung aufweist.

7. Vorrichtung nach Anspruch 6, wobei die Einrichtung zum Halten der Folie eine Hohlraumform aufweist, in die das Streckwerkzeug zusammen mit einer Einrichtung zum Schaffen eines Differenzfluiddruckes zum weiteren Streckten des gebildeten Gegenstandes nach dem Aufhören der gesamten Längs- und Auswärtsbewegung der Segmente oder Messer eingeführt wird.

**Revendications**

1. Procédé pour former par étirage un objet un objet creux à partir d'une feuille de matière thermoplastique à une température supérieure à 25°C en dessous du point de fusion et maintenue à l'encontre de tout mouvement notable de non-étirage, consistant à appliquer contre une face de la feuille dans un premier mouvement une multiplicité de pointes portées symétriquement par un outil à une température inférieure à 50°C en dessous du point de fusion de la feuille et comportant un plongueur ayant un axe s'étendant dans la direction de ce premier mouvement, chaque pointe étant constituée par une extrémité d'une lame se trouvant dans le même plan que l'axe du plongeur et articulée sur celui-ci, et, tandis que continue le premier mouvement, à faire pivoter les games autour des pivots tout en maintenant les lames dans le même plan que l'axe du plongeur pour séparer symétriquement les pointes dans des directions transversales au plongeur et amener p'arête extérieure de chaque lame à partir de la pointe progressivement vers l'arrière en contact avec la feuille.

2. Procédé selon la revendication 1, dans lequel les lames pivotent au milieu de leur longueur et tournent sous l'action d'une came agissant sur chaque lame à l'extrémité opposée à la pointe.

3. Procédé pour former par étirage un objet creux à partir d'une feuille de matière thermoplastique chauffée, consistant à disposer une multiplicité de lames allongées autour d'un axe donné et dans le même plan que cet axe, chaque lame ayant une pointe à une extrémité et une arête extérieure orientée en sens inverse de cet axe donné, à déplacer les lames parallèlement à cet axe donné de façon que les pointes des lames s'appliquent contre la feuille de matière thermoplastique et commencent à l'étirer, et, tandis que continue ce mouvement axial, à faire tourner chaque lame autour d'un axe transversal à cet axe donné de manière à basculer les pointes des lames pour les écarter de cet axe donné et amener les arêtes extérieures des lames en prise avec la portion étirée adjacente de la feuille.

4. Procédé selon la revendication 3, dans lequel les lames sont initialement inclinées par rapport à cet axe donné de sorte que les extrémités des pointes des lames sont plus près de cet axe donné que sont les extrémités opposées de ces lames.

5. Procédé selon l'une quelconque des revendications précédentes, dans lequel l'objet creux ainsi formé initialement est ensuite immédiatement formé dans une cavité de moule par application d'une différence de pression de fluide transversalement à la feuille.

6. Dispositif pour former par étirage un objet creux embouti à partir d'une feuille ramollie par la chaleur de matière thermoplastique, ce dispositif comportant des moyens pour maintenir la feuille à l'encontre de tout mouvement notable de non-étirage, un outil d'étirage ayant une extrémité pour venir en prise avec la feuille et des moyens pour provoquer un premier mouvement de l'outil d'étirage par rapport à la feuille de façon à appliquer cette extrémité contre la feuille et l'étirer, le dispositif comportant des moyens pour continuer le mouvement de l'outil d'étirage dans la direction de son premier mouvement et l'outil d'étirage comportant une multiplicité de segments plats ou lames avec des pointes pour venir initialement en prise avec la feuille et avec des arêtes pour venir progressivement en contact avec cette feuille tandis que continue le premier mouvement, et des moyens pour amener la séparation relative progressive de chaque segment ou lame par rapport à chaque autre segment ou lame lors de la continuation de ce premier mouvement.

7. Dispositif selon la revendication 6, dans lequel des moyens pour tenir la feuille comportent un moule à empreintes dans lequel pénètre l'outil d'étirage, en liaison avec des moyens pour procurer une pression différentielle de fluide pour dilater l'objet formé à la fin de tout mouvement longitudinal vers l'extérieur des segments ou lames.

0 006 682

FIG 1

FIG 2

FIG 3

FIG 9

FIG 8

FIG 4

FIG 7

FIG 5

FIG 10

FIG 6

FIG 12

FIG 11

FIG 13

FIG 14

FIG 15

35

30

FIG 16

FIG 17

FIG 18

FIG 19

FIG 20

68

64

69

65

FIG 21

67

FIG 22

66